(19) Europäisches Patentamt
European Patent Office
Office européen des brevets

(11) EP 1 947 143 A1

(12) **EUROPEAN PATENT APPLICATION**

(43) Date of publication:
**23.07.2008 Bulletin 2008/30**

(51) Int Cl.:
***C08L 23/10*** *(2006.01)* ***C08L 23/14*** *(2006.01)*
***C08K 5/00*** *(2006.01)*

(21) Application number: **07250230.5**

(22) Date of filing: **19.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Borealis Technology Oy**
**06101 Porvoo (FI)**

(72) Inventors:
- **Oysaed, Harry**
  **3960 Stathelle (NO)**
- **Johansen, Geir Morten**
  **3943 Porsgrunn (NO)**
- **Jaaskelainen, Pirjo**
  **06150 Porvoo (FI)**
- **Wachholder, Max**
  **4310 Mauthausen (AT)**

(74) Representative: **Gordon, Kirsteen Helen**
**Frank B. Dehn & Co.**
**St Bride's House**
**10 Salisbury Square**
**London EC4Y 8JD (GB)**

(54) **Polypropylene-based resin composition and molded article thereof**

(57) The present invention provides a moulded article comprising a polypropylene composition, wherein said composition comprises a polymer (e.g. copolymer) of propylene and a $C_4$ alpha olefin (e.g. 1-butene).

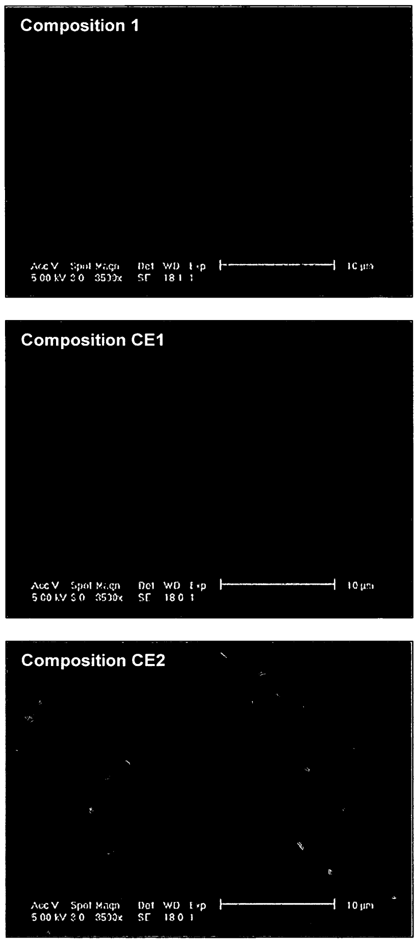


FIG. 2

EP 1 947 143 A1

## Description

The present invention relates to moulded articles comprising a polypropylene composition, to processes for preparing the afore-mentioned articles and to the polypropylene composition per se. Articles of particular interest in the present invention are those for use in the food industry, e.g. food containers.

Polypropylene polymers have excellent heat resistance and chemical resistance and, in the moulded form, have desirable mechanical properties such as rigidity and impact resistance. Propylene polymers are therefore an attractive option for the production of articles for use in the food industry, which often contact hot liquids, undergo sterilisation and are transported and stored prior to use.

A well known problem associated with articles made from propylene (and other thermoplastic) polymers, however, is that they are generally not gastight. Articles made from polypropylene therefore allow oxygen to penetrate through its walls into the container and, at the same time, allow any gas (e.g. $CO_2$) filled into the container to escape. Products, in particular food products, present in the containers may therefore be spoiled.

To improve the barrier properties of articles made from propylene, a barrier layer may be provided on the surface thereof. Plasma coating with silicon oxides (i.e. compounds of the formula $SiO_x$) is, for example, often used to provide such a barrier. The performance of such barrier layers is, however, highly dependent on how well the barrier layer is adhered to the article and in the case of moulded articles comprising polypropylene compositions, it has been found that barrier layers often do not provide adequate protection from penetration of oxygen into the containers. This is problematic, especially for containers containing food products (e.g. ketchup, fruit juice, syrup, sauce, etc).

A further problem associated with articles made from propylene polymers is that they tend to have poor transparency, e.g. haze may be as high as 15-20 % or more for moulded articles having a wall thickness of 0.5 mm. This is often undesirable in the containers used in the food industry where it is generally preferred if the consumer can view the product and especially the amount of product, present therein.

Haze is a problem that inherently occurs in moulded articles made from semi crystalline polymers such as polypropylene. Articles made from polypropylene scatter light from its crystalline phases (crystallites and spherulites) and also on the interface between amorphous and crystalline phases. In polypropylene the size of the crystalline units is often large enough to interfere with visible light and this interference results in haze. Herein haze is the total flux of light scattered within the angular range 2.5 to 90° and normalised to the total transmitted flux.

A number of strategies have been adopted to reduce haze in moulded articles made from polypropylene. For example, the addition of a nucleating agent leads to an increase in the number of nuclei present during crystallisation which results in a decrease in the spherulite size. When spherulite size reaches a critical value, i.e. it becomes smaller than the wavelength of the incident light, transparency is improved.

Various different nucleating agents have therefore been used to improve transparency in this way, e.g. benzoic acid, sodium benzoate, dibenzylidenesorbitol or derivatives thereof. However when polypropylene compositions containing nucleating agents such as sorbitol or sorbitol derivatives are heated during the moulding process, odours may be generated and these remain in the final products. Leaching can also occur when these articles are filled with a liquid. These effects are clearly undesirable in articles (e.g. containers) that are used in the food industry.

WO2006/018777 describes a different approach. It describes a process which affords clear stretch blow moulded polypropylene containers comprising: (i) moulding a propylene polymer composition comprising: (A) a homopolymer, minirandom copolymer or a copolymer of propylene and at least one olefin selected from ethylene and $C_{4-10}$ $\alpha$-olefins and (B) a radiant heat absorbent, to form a preform and (ii) stretch blow moulding. The examples of W02006/018777 illustrate use of a propylene-ethylene random copolymer in the process and show that haze may be reduced to less than 4 %. However, no coating of the resulting articles with a barrier layer is described.

A need therefore exists for alternative polypropylene articles for use in the food industry that have high transparency (i.e. low haze) as well as low oxygen permeability. At the same time, the mechanical properties of the article should not be compromised. Thus to enable articles to be transported, stored and handled without damage, they should additionally have good impact strength and a certain stiffness.

It has now been surprisingly found that articles having these advantageous properties may be prepared by moulding, especially injection stretch blow moulding (ISBM), a polypropylene composition which comprises a copolymer of propylene and a $C_4$ alpha olefin (e.g. 1-butene). These articles can subsequently be coated (e.g. plasma coated) with a barrier that limits, or prevents, permeation of oxygen through the walls of the article.

Thus viewed from one aspect the invention provides a moulded article comprising a polypropylene composition, wherein said composition comprises a copolymer of propylene and a $C_4$ alpha olefin (e.g. 1-butene). Preferred moulded articles are coated, e.g. with a barrier layer.

Viewed from a further aspect the invention provides a process for the manufacture of an article as hereinbefore described comprising moulding (e.g. injection moulding, blow moulding, stretch moulding, compression moulded, rotomoulding or ISBM) a polypropylene composition comprising a copolymer of propylene and a $C_4$ alpha olefin (e.g. 1-butene). A preferred process further comprises coating the moulding article, e.g. with a barrier layer.

Viewed from still a further aspect the invention provides use of a polypropylene composition as hereinbefore described for the manufacture of an article by moulding (e.g. injection moulding, blow moulding, stretch moulding, compression moulded, rotomoulding or ISBM).

Viewed from yet a further aspect the invention provides a polypropylene composition comprising a copolymer of propylene and a $C_4$ alpha olefin (e.g. 1-butene).

As used herein the term "moulded article" is intended to encompass articles that are produced by any conventional moulding technique, e.g. injection moulding, blow moulding, stretch moulding, compression moulding, rotomoulding or injection stretch blow moulding. The term is not intended to encompass articles that are produced by casting or extrusion. Thus the term is not intended to include films or sheets.

The polypropylene present in the composition of the invention is preferably multimodal (e.g. bimodal) with respect to comonomer content. It is thought that use of such polypropylene facilitates moulding, especially by ISBM processes. More specifically, it is believed that the use of multimodal polypropylene increases the ISBM processing window whilst still providing final articles with excellent optical properties.

Multimodality may be achieved by use of a propylene copolymer and a propylene homopolymer. Alternatively, two propylene copolymers with different comonomer content may be present. Thus preferred polypropylene compositions for use in the present invention comprise: (i) a propylene homopolymer and/or a propylene copolymer and (ii) a copolymer of propylene and a $C_4$ alpha olefin as hereinbefore described.

When two propylene copolymers are present, the nature of the comonomer used in each component will preferably be different and/or the amount of comonomer used in each component will be different, e.g. at least differing by 1 mol%, preferably at least 2 mol%, more preferably at least 3 mol%, still more preferably at least 4 mol%. This provides multimodality.

Whether polypropylene comprises a propylene copolymer and a propylene homopolymer or two different propylene copolymers, it is preferred that at least 5 % wt, more preferably at least 10 % wt, still more preferably at least 20 %wt, e.g. at least 30 %wt of the total weight of polypropylene derives from each polymer.

Particularly preferred polypropylene for use in the invention comprises:

(i) at least 5 % wt of a propylene homopolymer and/or a propylene copolymer (e.g. a copolymer of propylene and comonomer selected from ethylene and/or $C_{4-10}$ alpha olefin); and
(ii) at least 5 % wt of a copolymer of propylene and a $C_4$ alpha olefin

The polypropylene preferably comprises 10 to 90 wt % of polymer (i), preferably 30 to 70 wt %, more preferably 40 to 60 wt % and most preferably 45 to 55 wt %. The composition also preferably comprises 10 to 90 wt % of polymer (ii), preferably 30 to 70 wt %, more preferably 40 to 60 wt % and most preferably 45 to 55 wt %.

As used herein the term "homopolymer" is intended to encompass polymers which consist essentially of repeat units deriving from a single monomer. Homopolymers, may for example, comprise at least 99 mol %, preferably at least 99.5 mol %, more preferably at least 99.9 mol % of repeat units deriving from a single monomer.

As used herein the term "copolymer" is intended to encompass polymers comprising repeat units from two, three or more monomers. In typical copolymers at least 1 mol %, preferably at least 2 mol %, more preferably at least 3 mol %, e.g. at least 5 mol % of repeat units derive from each of at least two different monomers. Copolymers may comprise $\alpha$-olefins having 2 or 4-10 carbon atoms. Examples of suitable monomers include ethylene, but-1-ene, pent-1-ene, hex-1-ene and oct-1-ene. Ethylene and but-1-ene are preferred, especially but-1-ene. The total amount of any $\alpha$-olefin that is copolymerised with propylene may be up to 50 mol%, more preferably up to 20 mol%, e.g. up to 10 mol%.

Copolymers present in the polypropylene of the invention may be block copolymers and/or random copolymers, but preferably are random copolymers. By a random copolymer is meant herein that the comonomer is distributed mainly randomly along the polymer chain. Any known olefin polymerisation catalyst may be used to make such polymers, e.g. metallocene or Ziegler Natta catalysts. Preferred random copolymers are those made using Ziegler Natta catalysts. Such copolymers have been found to increase the transparency of the final moulded (e.g. ISBM) articles.

Polymer (i) preferably comprises up to 5 mol % comonomer, more preferably up to 4 mol % comonomer (e.g. 0.5 to 3 mol%). Where polymer (i) is copolymeric, the comonomer is preferably ethylene and/or but-1-ene, e.g. but-1-ene. In some embodiments polymer (i) is preferably a copolymer. In other embodiments, polymer (i) is preferably a homopolymer.

The $MFR_2$ of polymer (i) may be in the range 0.1 to 100 g/10 min, preferably 1 to 60 g/10 min, more preferably 2 to 50 g/10 min, e.g. 5 to 30 g/10 min.

The isotacticity of polymer (i) when it is a homopolymer may be as high as 98% although will preferably be at least 85 %, e.g. in the range 90 to 95 %.

The but-1-ene content of polymer (ii) may be in the range 0.5 to 10 mol %, preferably 2 to 8 mol %, and most preferably 3 to 7 mol %. Polymer (ii) may solely comprise but-1-ene comonomer. Alternatively other comonomers may additionally be present (e.g. ethylene). The total comonomer content of polymer (ii) (i.e. the total mol% of all comonomers)

is preferably in the range 0.5 to 15 mol%, preferably 2 to 10 mol%.

Where both components (i) and (ii) are copolymeric, it is preferred if polymer (ii) has a higher comonomer content. Alternatively or additionally, polymer (i) may comprise a different comonomer to polymer (ii). The polypropylene present in the compositions of the invention may therefore be a terpolymer.

It will be appreciated that in certain circumstances it will be impossible to measure the properties of either polymer (i) or polymer (ii) directly e.g. when a polymer is made second in a multistage process. The person skilled in the art will be able to work out the properties of each polymer from measurements taken on the first formed component and the overall properties of the polymer composition.

Polymer (ii) generally has an $MFR_2$ of similar value to that of polymer (i), e.g. within 5 g/10 min thereof, preferably within 3 g/10 min thereof.

The total but-1-ene content of the polypropylene is preferably at least 1.5 %mol (e.g. 2-7 %mol). The total comonomer content of the polypropylene is preferably 1 to 7 mol %, more preferably at least 1.5 mol%, e.g. 2.0 to 6 mol %, and most preferably 3 to 5 mol%.

The polypropylene of the present invention preferably has a melt flow rate in the range 0.1 to 100 g/10 min, preferably 1 to 60 g/10 min, more preferably 2 to 50 g/10 min, e.g. 5 to 30 g/10 min when measured according to ISO 1133 at 230 °C and a load of 2.16 kg.

The polypropylene of the present invention is also preferably multimodal, e.g. bimodal, with respect to molecular weight distribution (MWD), i.e. its molecular weight profile does not comprise a single peak but instead comprises the combination of two or more peaks (which may or may not be distinguishable) centred about different average molecular weights as a result of the fact that the polymer comprises two or more separately produced components. It is believed that the multimodal nature of the claimed composition allows improvements in processing properties. Preferably the MWD of the polypropylene is in the range 1.5 to 10, more preferably 2 to 7, still more preferably 3 to 5, e.g. about 2 to 4.

The xylene soluble fraction of the polypropylene can range from 0.1 to 20 %, preferably 1 to 15 wt%. Preferably the xylene soluble fraction of the polypropylene is less than 10 wt%, more preferably less than 7 wt%. The melting point of the polymer may range from 150 to 180°C, preferably around 150 to 170°C, e.g. 155 to 165°C. The polymer is preferably partially crystalline, e.g. having a crystallinity of the order of 20 to 50 %, e.g. 25 to 40%.

The polypropylene composition for use in the invention preferably comprises a nucleating agent. Any conventional nucleating agent may be used, e.g. a non-polymeric nucleating agent (e.g. aromatic or aliphatic carboxylic acids, aromatic metal phosphates, sorbitol derivatives and talc) or a polymeric nucleating agent. Suitable non-polymeric nucleating agents include dibenzylidene sorbitol compounds (such as unsubstituted dibenzylidene sorbitol (DBS), p-methyldibenzylidene sorbitol (MDBS), 1,3-O-2, 4-bis (3, 4-dimethylbenzylidene) sorbitol (DMDBS) available from, e.g. Milliken under the trade name Millad 3988)), sodium benzoate, talc, metal salts of cyclic phosphoric esters (such as sodium 2, 2'-methylene-bis- (4, 6-di-tert-butylphenyl) phosphate (from Asahi Denka Kogyo K. K., known as NA-11), and cyclic bisphenol phosphates (such as NA-21, also available from Asahi Denka)), metal salts (such as calcium) of hexahydrophthalic acid, and the unsaturated compound of disodium bicyclo [2.2. 1] heptene dicarboxylate, known as HPN-68 available from Milliken.

More preferably, however, the polypropylene composition used in the present invention is nucleated with a polymeric nucleating agent, e.g. a polymer derived from vinyl cycloalkanes and/or vinyl alkanes. Polymeric nucleating agents have less of a tendency than the corresponding non-polymeric agents to leach to the surface of the moulded articles and potentially effect the product contained therein.

Preferably the polymeric nucleating agent contains vinyl compound units. A polymeric nucleating agent containing vinyl compound units may be a homopolymer of a vinyl compound, a copolymer of different vinyl compounds or a copolymer of a vinyl compound and an $\alpha$-olefin. The copolymers may be random or block copolymers. $\alpha$-Olefins which may be copolymerised with the vinyl compound may comprise 2 to 8 carbon atoms (e.g. ethylene, propylene and but-1-ene). Propylene is particularly preferred. The amount of any $\alpha$-olefin which may be copolymerised with the vinyl compound may be up to 30 mol%, e.g. up to 10 mol%.

Preferably the polymeric nucleating agent is a homopolymer of a vinyl compound. Preferred polymeric nucleating agents present in the compositions of the present invention comprise vinyl compound units deriving from a vinyl compound of formula (I):

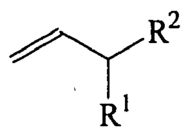

wherein $R^1$ and $R^2$, together with the carbon atom they are attached to, form an optionally substituted, fused ring system

or saturated, unsaturated or aromatic ring, wherein said ring system or ring comprises 4 to 20 carbon atoms (e.g. 5 to 12 carbon atoms) or $R^1$ and $R^2$ independently represent a linear or branched $C_{4-30}$ alkane, a $C_{4-20}$ cycloalkane or a $C_{4-20}$ aromatic ring.

Preferably $R^1$ and $R^2$, together with the carbon atom they are attached to, form an optionally substituted, optionally $C_{1-2}$ bridged, 5 or 6 membered saturated, unsaturated or aromatic ring or $R^1$ and $R^2$ independently represent a $C_{1-4}$ alkyl group.

In further preferred compounds of formula (I), $R^1$ and $R^2$, together with the carbon atom they are attached to, form a 6 membered ring. Still more preferably $R^1$ and $R^2$, together with the carbon atom they are attached to, form a non-aromatic ring (i.e. a vinyl cycloalkane). In particularly preferred compounds the ring formed by $R^1$ and $R^2$, together with the carbon atom they are attached to, is unsubstituted.

Representative examples of vinyl compounds which may be present in the polymeric nucleating agent used in the present invention include vinyl cyclohexane, vinyl cyclopentane, vinyl-2-methyl cyclohexane, 3-methyl-1-pentene, 4-methyl-1-pentene, 3-methyl-1-butene, 3-ethyl-1-hexene or a mixture thereof. Vinyl cyclohexane is a particularly preferred vinyl compound. Preferably the nucleating agent is not a polymer comprising units derived from 3-methylbutene-1.

The polypropylene composition of the invention preferably further comprises a reheat additive. Any conventional reheat additive may be used. Preferred reheat additives are materials that absorb infrared radiation through a significant range of the infrared spectrum, e.g. through the range 700-25000 nm. Representative examples of reheat additives include carbon black, graphite, gas black, oil furnace black, channel black, anthracene black, acetylene black, thermal black, lamp black, vegetable black, animal black, anthraquinone derivatives, Sb and mixtures thereof. Preferably the reheat additive is Sb.

The reheat additive may be present in the polypropylene compositions herein described in amounts of 1 to 1000 ppm wt, more preferably from 1 to 100 ppm wt, still more preferably from 5 to 40 ppm wt.

The presence of a reheat additive is advantageous as it improves the rate of heat transfer to the polymer preform that is formed during moulded processes as well as the distribution of heat within the preform. This, in turn, allows more efficient use of heat input, increases production rate and yields more homogeneous product.

The polypropylene present in the compositions of the invention may be prepared by simple blending (e.g. melt blending, preferably extrusion blending), by two or more stage polymerisation or by the use of two or more different polymerisation catalysts in a one stage polymerisation. Blending may, for example, be carried out in a conventional blending apparatus (e.g. an extruder).

Alternatively the polypropylene may be produced in a multi-stage polymerisation using the same catalyst, e.g. a metallocene catalyst or preferably a Ziegler-Natta catalyst. In a preferred multi-stage polymerisation a slurry polymerisation in a loop reactor is followed by a gas phase polymerisation in a gas phase reactor. Conventional cocatalysts, supports/carriers, electron donors etc. can be used.

A loop reactor - gas phase reactor system is described in EP-A-0887379 and WO92/12182, the contents of which are incorporated herein by reference, and is marketed by Borealis GmbH, Austria as a BORSTAR reactor system. The propylene polymer used in the invention is thus preferably formed in a two stage process comprising a first slurry loop polymerisation followed by gas phase polymerisation in the presence of a Ziegler-Natta catalyst.

With respect to the above-mentioned preferred slurry-gas phase process, the following general information can be provided with respect to the process conditions.

A temperature of from 40°C to 110°C, preferably between 60°C and 100°C, in particular between 80°C and 90°C is preferably used in the slurry phase. The pressure in the slurry phase is preferably in the range of from 20 to 80 bar, preferably 30 to 60 bar, with the option of adding hydrogen in order to control the molecular weight being available. The reaction product of the slurry polymerization, which preferably is carried out in a loop reactor, is transferred to a subsequent gas phase reactor, wherein the temperature preferably is within the range of from 50°C to 130°C, more preferably 80°C to 100°C. The pressure in the gas phase reactor is preferably in the range of from 5 to 50 bar, more preferably 15 to 35 bar, again with the option of adding hydrogen in order to control the molecular weight available. The residence time can vary in the reactor zones identified above. The residence time in the slurry reaction, for example the loop reactor, may be in the range of from 0.5 to 5 hours, for example 0.5 to 2 hours. The residence time in the gas phase reactor may be from 1 to 8 hours.

The properties of the polypropylene produced with the above-outlined process may be adjusted and controlled with the process conditions as known to the skilled person, for example by one or more of the following process parameters: temperature, hydrogen feed, comonomer feed, propylene feed, catalyst, type and amount of external donor and the split between two or more components of the polymer.

Preferably, the first polymer of the polypropylene of the invention is produced in a continuously operating loop reactor where propylene (and comonomer when required) is polymerised in the presence of a polymerisation catalyst (e.g. a Ziegler Natta catalyst) and a chain transfer agent such as hydrogen. The diluent is typically an inert aliphatic hydrocarbon, preferably isobutane or propane.

The second polymer can then be formed in a gas phase reactor using the same catalyst. Prepolymerisation

can be employed as is well known in the art. Ziegler-Natta catalysts are preferred. The nature of the preferred Ziegler-Natta catalyst is described in numerous prior publications, e.g. US 5234879.

Nucleation of the propylene polymers for use in the invention may be carried out by conventional techniques, e.g. by blending. More preferably, however, when the nucleating agent is a polymer containing vinyl compound units, nucleated propylene polymers are made by modifying a polymerisation catalyst with vinyl compounds as hereinbefore described and using the modified catalyst for the polymerisation of propylene, optionally in the presence of comonomers. The catalyst systems and reaction conditions suitable for application in this latter method are described in WO99/24501. For instance, examples 1 and 2 described therein disclose a specific procedure which may be used to prepare a propylene polymer comprising a polymeric nucleating agent for use in the compositions of the present invention.

The resulting propylene polymers preferably comprise 0.01 to 1000 ppm wt of polymeric nucleating agent. Preferred polypropylene compositions of the invention comprise 0.1 to 100 ppm wt of a polymeric nucleating agent, more preferably 0.5 to 50 ppm wt of polymeric nucleating agent, still more preferably 1 to 10 ppm wt.

Non-polymeric nucleating agents may be added to the compositions for use in the invention in an amount from about 0.01 percent to about 10 percent by weight based on the weight of the total composition. In most applications, however, less than about 3.0 percent by weight (based on weight of total composition) are required. In some applications, such compounds may be added in amounts from about 0.05 to about 0.3 % (based on weight of total composition) to provide beneficial characteristics.

The polymer compositions of the present invention may also contain any conventional additives (e.g. process, heat and light stabilisers, colorants, antistatic agents, antioxidants, carbon black, pigments, flame retardants, foaming agents, blowing agents, etc). A filler may also be present (e.g. talc). Preferably the composition does not contain glycerol monostearate.

The polypropylene composition is particularly suitable for use in the manufacture of articles by moulding processes. Any conventional moulding processess may be used including injection moulding, blow moulding, stretch moulding, compression moulded, rotomoulding or ISBM. Preferably, however, the polypropylene composition used is ISBM.

Injection stretch blow moulding stretches the polymer at temperatures below the polymer melting point in a stretch blow moulding step and thereby impacts biaxial orientation. This improves the physical and optical properties of the article. In fact, articles made by ISBM of the polypropylene compositions hereinbefore described have surprisingly good transparency (i.e. low haze). Moreover the polypropylene compositions also have larger processing windows for the stretch blow moulding step compared to unimodal random polypropylene copolymers. As a result, articles with low haze can be prepared by ISBM without highly precise temperature control, and improved throughput may be achieved.

Two types of ISBM process are generally practised. In the single-stage process a preform is injection moulded and blown before it is allowed to cool. In the two-stage process the injection moulded preform is allowed to cool before it is reheated and blown into a container. These processes are well known and the person skilled in the art would be able to choose appropriate process conditions. Ideally however, the stretching temperatures used are between 110°C and 160 °C, e.g. 130°C.

Control of the temperature of the polymer during the biaxial stretching step is critical. If the temperature is too high the stretched polymer will include areas of melted polymer, which reduces the molecular orientation, and will show variation in sample thickness. If the temperature is too low it will not be possible to biaxially stretch the polymer without the polymer failing, e.g. the stretch rod may puncture the preform. The processing window for any given polymer is the temperature range over which the polymer can in practice be blown without visible failures. Visible failures will be readily determined by those skilled in the art. For example, temperatures that are too low for stretching causes the stretch rod to puncture the preform. Temperatures that are too high for stretching cause the polymer to melt and leads to variations in the thickness of the blown articles. The polymer compositions of the invention exhibit a reasonable processing window (measured as hereinbefore described). Preferably the processing window is 5 °C or more, still more preferably 7 °C or more.

The moulded articles that result from processing, especially ISBM processing, have superb surface smoothness as well as excellent mechanical and optical properties. The surface of moulded articles is surprisingly much smoother than moulded articles lacking a copolymer of propylene and a $C_4$ alpha olefin. Preferred articles have a mean surface roughness, Ra of less than 10 nm, preferably less than 6 nm, e.g. 0.1 to 5 nm, as measured according to the method described in the examples. Further preferred articles have a maximum surface roughness, Rt of less than 150 nm, preferably less than 50 nm, e.g. 2 to 15 nm, as measured according to the method described in the examples.

The provision of such a smooth surface is highly advantageous for subsequent coating of the article. Coatings are, for example, more easily adhered to smooth surfaces and thus are less likely to subsequently delaminate. Thus preferred moulded articles of the invention are coated. Coating may be carried out on the exterior and/or interior of the moulded article. Particularly preferred articles are coated at least on the interior.

A preferred coating present on the moulded articles of the present invention comprises a barrier layer, e.g. a barrier layer that reduces the permeability of the moulded article to oxygen. A particularly preferred barrier layer comprises silicon oxides, e.g. of the formula $SiO_x$ wherein x is 1 to 2.

Barrier coatings, e.g. $SiO_x$ coatings, may be provided on the moulded articles of the invention by any procedure known in the art. Preferably, however, the barrier coating is provided by chemical vapour deposition, especially plasma enhanced chemical vapour deposition, in particular plasma impulse chemical vapour desposition. Particularly preferably the barrier coating is provided by chemical vapour deposition of a silicon-containing gas such as hexamethyldisiloxane, hexamethyldisilazane or mixtures thereof.

In a particularly preferred process, chemical vapour deposition is used to provide alternating layers of organic adhesion-promoter layer and inorganic barrier layer as described in US2005/0118428, the contents of which are incorporated herein in their entirety. Particularly preferably, an organic adhesion-promoter layer is deposited on the surface of the moulded article and then the inorganic barrier layer is deposited thereon. Subsequent alternating layers may optionally be provided. The silicon containing gas used in this process may be, as mentioned above, hexamethyldisiloxane, hexamethyldisilazane or mixtures thereof. The process parameters may be controlled as described in US2005/0118428 to afford organic adhesion-promoter or inorganic barrier layer as required.

Preferred coatings present on the moulded articles of the invention have thicknesses in the range 1 to 400 nm, preferably 5 to 200 nm, e.g. 10 to 50 nm.

The resulting coated articles have improved barrier properties compared to the uncoated moulded articles. Preferably permeability to oxygen is reduced by at least 20 %, more preferably at least 50 %, e.g. at least 85 % by 20 nm coating (e.g. $SiO_x$ coating).

Particularly preferred coated articles of the invention (e.g. 0.3 1 bottles formed from a 17 g preform as described in the examples) have an oxygen permeability of less than 0.05, still more preferably less than 0.03, e.g. less than 0.02 $O_2$/package/day, as determined by the method described in the examples.

Particularly preferred coated articles additionally have improved barrier properties to $CO_2$ compared to uncoated articles. Preferably permeability to $CO_2$ is reduced by at least 20 %, more preferably at least 50 %, e.g. at least 80 % by 20 nm coating (e.g. $SiO_x$ coating).

Moreover, as mentioned above, the moulded articles that result from moulding of the polypropylene composition hereinbefore described, especially by ISBM, have excellent optical and mechanical properties. Haze values of less than 10%, preferably less than 8%, more preferably less than 5 %, e.g. less than 2 % are achievable on moulded, e.g. ISBM, articles having a thickness of 0.5 mm. It is envisaged that the polymer composition of the invention, when biaxially stretched results in a surface of more perfect molecular orientation leading to improved clarity.

The tensile modulus of moulded articles that result from moulding, e.g. by injection moulding, processes is preferably more than 800 MPa, more preferably higher than 1000 MPa, still more preferably higher than 1100 MPa.

The Top Load strength of moulded articles that result from moulding, e.g. by ISBM, processes is preferably at least 110 N, more preferably at least 120 N.

Representative examples of articles that may be prepared using the polypropylene compositions hereinbefore described include thin walled packaging, caps and closures. An example of thin walled packaging is a container (e.g. bottle). The containers (e.g. bottles) may be used in any application (e.g. as food, chemical, paint containers, etc) but are particularly suitable for use in the food industry are particularly preferred.

Particularly preferred containers are those used for hot-fill applications. In this process, a food product (e.g. ketchup, soup, sauce, fruit juice) is heated (e.g. to temperatures between 70 to 140 °C) and then placed in the container.

The invention will now be described with further reference to the following non-limiting examples.

## EXAMPLES

### Analytical Tests

Values quoted in the description/examples are measured according to the following tests:

- Melt flow rate ($MFR_2$) was measured according to ISO 1133 at 230°C and a load of 2.16 kg.
- Density is measured according to ISO 1183
- Comonomer content was determined in a known manner based on FTIR measurements calibrated with $^{13}C$ NMR.
- The molecular weights and molecular weight distributions of polymers were determined with a method based on ISO 16014-4:2003. A Millipore Waters ALC/GPC operating at 135 °C and equipped with two mixed bed and one 107 Å TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes.
- The xylene soluble fraction (XS) was determined as follows:

2.0 g of polymer are dissolved in 250 ml p-xylene at 135°C under agitation. After 30± minutes, the solution was allowed to cool for 15 minutes at ambient temperature and then allowed to settle for 30 minutes at 25± 0.5°C. The solution was filtered with filter paper into two 100 ml flask. The solution from the first 100 ml vessel was evaporated in nitrogen flow and the residue dried under vacuum at 90°C until constant weight is reached. Xylene soluble fraction (percent) can then

be determined as follows:

$$XS\% = (100 \text{ x } m_1 \text{ x } v_0)/(m_0 \text{ x } v_1),$$

wherein $m_0$ designates the initial polymer amount (grams), $m_1$ defines the weight of residue (grams), $v_0$ defines the initial volume (milliliter) and $v_1$ defines the volume of analyzed sample (milliliter).
The solution from the second 100 ml flask was treated with 200 ml of acetone under vigorous stirring. The precipitate was filtered and dried in a vacuum oven at 90°C. This solution can be employed in order to determine the amorphous part of the polymer (AM) using the following equation:

$$AM\% = (100 \text{ x } m_1 \text{ x } v_0)/(m_0 \text{ x } v_1)$$

wherein $m_0$ designates the initial polymer amount (grams), $m_1$ defines the weight of residue (grams), $v_0$ defines the initial volume (milliliter) and $v_1$ defines the volume of analyzed sample (milliliter).

• Melting temperature ($T_m$), crystallization temperature ($T_c$) and degree of crystallinity ($X_c$) were measure according to ISO11357. The samples were cut from compression molded, 0.2 mm films. The measurements were performed at the following conditions:

| Stage | Temperature Program | Heating/Cooling Rate *°C/min* | Time *min* |
|---|---|---|---|
| 1st heating | 20-225 °C | 10 | |
| Isothermal | 225 °C | | 5 |
| Cooling | 225-20 °C | -10 | |
| Isothermal | 20 | | 1 |
| 2nd heating | 20-225 °C | 10 | |

The $T_m$ and $X_c$ were determined from the second heating. The degree of crystallinity (Xc) was calculated using a melting enthalpy of 100 % PP equal to 209 J/g.

• Processing window processing window for biaxial stretching was measured by stretch blow moulding of 300 ml polypropylene bottles on a one-cavity SIG Corpoplast LB01HR machine from 17 g pre-forms. This machine is equipped with two heater boxes, each having 5 IR lamps (L1-L5), but only one box was used in the determination of processing windows. L1 and L2 were 2500 watt lamps and L3, L4 and L5 were 2000 watt. The setting ratio of the lamps in the heater box was L1/L2/L3/L4/L5 46/57/85/85/54. All preforms were heated for the same period of time, only total heating was changed. Preforms were heated in two periods, HT1 and HT2. Between HT1 and HT2 is a conditioning time, CT1. After HT2 and before stretching is a conditioning time, CT2. HT1, HT2, CT1 and CT2 were 15 seconds, 4.6 seconds, 13 seconds and 10 seconds respectively. During heating of the preforms, surface cooling was provided to prevent surface melting. Cooling was carried out at 80% of the fan capacity. Additionally the preform was rotated on a mandrel throughout heating and conditioning at a speed of 100 rpm. After CT2, all bottles were blown under the same conditions. The preform was brought into the bottle mould and first stretched at a speed of 1000 mm/s. A pressure of 6 bar for 1.2 seconds was then used to blow up the bottle.
For each sample, the total heating energy was changed in steps and the resulting pre-form temperatures recorded to find the upper preform temperature and lower preform temperature at which bottles without visible failures can be blown. This range was defined as the processing window.

• Haze was measured on injection moulded plaques according to ASTM D1003 at a thickness of 1 mm unless otherwise indicated and on injection stretch blow moulded (uncoated) bottles according to ASTM D1003 at a thickness of 0.6 mm unless otherwise indicated.

• Tensile modulus was measured on specimen according to ISO3167 (Multipurpose test specimen, type A (injected moulded)) according to ISO 527-2:1993. The modulus was measured at a speed of 50mm/min

• Top load was measured by a compression test. This test was used to measure the rigidity of 300 ml injection stretch blow moulded bottles (uncoated) made from a 17 g preform without caps. The method of standard test ASTM 2659-95 on a Zwick tensile machine operated at a velocity of 10 mm/min was followed.

• Adhesion was measured by a peel test and visual inspection.
• Creep was measured by filling the coated bottles with 0.3 1 of carbonated liquid with a $CO_2$ content of 4 % and were closed off with a plastic cap. Then the filled bottles were initially stored at room temperature for 24 hours, followed by 24 hours at 38 °C.
An internal pressure of up to 5 bar was then built up in the bottle resulting in the bottle being stretched more than 4.5 % and possibly plastic deformation. The coating layer was then examined for detachment to the surface of the bottle and for the appearance of cracks.
• Oxygen permeation was measured according to ASTM D3985 on 0.3 1 bottles on a Mocon-Oxtran instrument. The bottles had a $N_2$ atmosphere inside and were kept at 23 °C and 50% relative humidity (outside atmosphere). An aluminium cap was welded onto it.
• Surface roughness was determined using digital holographic microscopy (DHM) on a reflection microscope with objective x50, numerical aperture 0.75, working distance 0.38 mm, lateral resolution <0.775 μm, depth of focus 0.52 μm, field of view 110 μm, light source VCEL laser diode (682.5nm). Ra (nm) is the mean roughness defined as the average of the absolute values. Rt (nm) is the maximum roughness defined as the highest peak to peak value.

**Material**

The following polypropylene compositions were employed in the examples:

| | Component (A) | Component (B) | $MFR_2$ (g/10 mins) | Comonomer content (% mol) |
|---|---|---|---|---|
| 1 | $C_3/C_4$ random copolymer ($C_4$ 1.6 %mol) | $C_3/C_4$ random copolymer ($C_4$ 6.8 mol%) | 23 | $C_4$ (4) |
| CE1 | PP homopolymer | $C_2/C_3$ random copolymer ($C_2$ 6.6 mol%) | 26 | $C_2$(3.3) |
| CE2 | Random $C_2/C_3$ copolymer | | 20 | $C_2$ (4.8) |
| CE - comparative example | | | | |

Composition 1 and CE2 was nucleated with 1700 ppm 1,3-O-2,4-bis (3,4-dimethylbenzylidene) sorbitol (DMDBS). CE1 was nucleated with a polymer of VCH (vinyl cyclohexane).

**Production of Polypropylene Compositions**

Composition 1 and Comparative Example 1

These were prepared according to the process described in WO99/24478, Example 8 using a multistage polymerisation process comprising a prepolymerisation, a polymerisation in a loop reactor (slurry polymerisation), followed by a final polymerisation in a gas phase reactor. Comonomer was additionally supplied to the loop reactor and/or gas phase reactor during polymerisation. The polymerisation conditions used are summarised in the Table below. The ZN catalyst used is described in US5,234,879 at a temperature of 135 °C. The catalyst was contacted with a cocatalyst (triethylaluminium, TEAL), and an external donor (donor D, dicyclopentyl dimethoxysilane) with the Al/Ti ratio of 200 and an Al/D ratio of 10, to yield the catalyst system.
The catalyst system and propylene were fed into the prepolymerisation reactor which was operated at 30 °C. The prepolymerised catalyst was used in the subsequent polymerisation reactors. Propylene, hydrogen, prepolymerised catalyst and optionally ethylene or 1-butene were fed into the loop reactor which was operated as a bulk reactor at the temperatures as indicated in the Table below and a pressure of 55 bar.
Then, the polymer slurry stream was fed from the loop reactor into the gas phase reactor which was operated at the temperatures as indicated in the Table below and a pressure of 20 bar. Propylene, ethylene or 1-butene and hydrogen were fed into the gas phase reactor to control the desired properties of the final polymer.

| | 1 | CE 1 | CE 2 |
|---|---|---|---|
| Al/D (mol/mol) | 10 | 10 | |
| Loop/GPR Split % | 56 / 44 | 48 / 52 | |
| Loop | | | |
| Temperature (°C) | 85 | 85 | |
| MFR2 (g/10 min) | 20 | 26 | |
| Co-monomer content (mol-%) | 1.6 ($C_4$) | 0.0 | |
| GPR | | | |
| Temperature (°C) | 85 | 85 | |
| Final product | | | |
| Co-monomer content (mol-%) | 4.0 ($C_4$) | 3.3 ($C_2$) | 4.8 ($C_2$) |
| MFR2 (g/10 min) | 23 | 26 | 20 |
| XS (%) | 2.1 | 5.2 | 6.5 |
| Tm (°C) | 158 | 162 | 148 |
| Tc (°C) | 126 | 127 | 120 |

Comparative Example 2

This is a commercially available random polypropylene ethylene polymer that contains 1700 ppm Millad 3988. The properties of this polymer are shown in the Table above.

**Injection Stretch Blow Moulding of polypropylene compositions to form bottles**

PPreX® pre-forms with neck dimension 38/10mm and weight 17 g were injection moulded at standard conditions for PP having a $MFR_2$ of 20.

Polypropylene bottles (300 ml) were stretch blow moulded on a one-cavity SIG Corpoplast LB01HR machine from the pre-forms. This machine is equipped with two heater boxes, each having 5 IR lamps (L1-L5), but only one box was used in these experiments. L1 and L2 were 2500 watt lamps and L3, L4 and L5 were 2000 watt. The setting ratio of the lamps in the heater box was L1/L2/L3/L4/L5 46/57/85/85/54. All preforms were heated for the same period of time, only total heating was changed. Preforms were heated in two periods, HT1 and HT2. Between HT1 and HT2 is a conditioning time, CT1. After HT2 and before stretching is a conditioning time, CT2. HT1, HT2, CT1 and CT2 were 15 seconds, 4.6 seconds, 13 seconds and 10 seconds respectively. During heating of the preforms, surface cooling was provided to prevent surface melting. Cooling was carried out at 80% of the fan capacity. Additionally the preform was rotated on a mandrel throughout heating and conditioning at a speed of 100 rpm. After CT2, all bottles were blown under the same conditions. The preform was brought into the bottle mould and first stretched at a speed of 1000 mm/s. A pressure of 6 bar for 1.2 seconds was then used to blow up the bottle.

For each sample, the total heating energy was changed in steps and the resulting pre-form temperatures recorded to find the upper preform temperature and lower preform temperature at which bottles without visible failures can be blown (the processing window). The results are shown in the table below.

| | 1 | CE1 | CE2 |
|---|---|---|---|
| Upper Heating value (%) | 76 | 78 | 68 |
| Upper Temperature (°C) | 148 | 155 | 137 |
| Lower Heating value (%) | 66 | 68 | 62 |
| Lower Temperature (°C) | 144 | 150 | 134 |
| Processing window (°C) | 4 | 5 | 3 |

For all samples the top load strength and surface roughness was determined for each bottle. Haze was also

analysed at the top of each bottle, as shown in figure 1, according to ASTM D1003. The thickness of the top section of the bottles (i.e. where haze was measured) was also determined using a micrometer (screw form with gauge). For comparison purposes, the haze of injection moulded plaques prepared from each of the compositions was also determined. The results are shown in the Table below.

| | 1 | CE1 | CE2 |
|---|---|---|---|
| Tc(°C) | 126 | 127 | 120 |
| Tm(°C) | 158 | 162 | |
| IM Plaques: | | | |
| Haze (%) | 24 | 36 | 10 |
| Thickness (mm) | 1 | 1 | 1 |
| Tensile modulus (MPa) | 1430 | 1200 | 1150 |
| ISBM Bottles: | | | |
| Processing window (°C) | 4 | 5 | 3 |
| Haze (%) | 1.5 | 4.5 | 2.7 |
| Thickness (mm) | 0.58 | 0.62 | 0.33 |
| Top Load (N) | 132 | 101 | 110 |
| Surface Roughness | | | |
| Ra (nm) | 3.7 | 11.6 | |
| Rt (nm) | 6.7 | 172 | |

The results show that the articles of the present invention have a low haze (i.e. high transparency). The article made by ISBM of composition 1 has a lower haze at a thickness of 0.58 mm than the article made by ISBM of comparative example 2 at a smaller thickness (0.33 mm).

Moreover the results show that the polypropylene composition of the invention advantageously yields articles having smooth surface. Figure 2 shows SEM pictures (magnification 3500x) of the inside surface of bottles made from each of the compositions. The bottle made from composition 1 is highly uniform which facilitates coating.

**Coating Trials**

0.3 1 bottles (made as described above) were internally coated with SiOx according to the procedure described in embodiment 4 of US2005/0118428. SEM pictures (magnification 5000x) of the inside of each of the coated bottles were taken and are shown in Figure 3.

The adhesion of the resulting coatings to the PP bottles was also tested and all were found to be excellent (i.e. no delamination occurred).

The oxygen permeability of each of the coated articles was then tested and the results are shown in the Table below.

| Composition of bottle | Oxygen Permeation (ml $O_2$/pck/day @ 23 °C, 0.21 bar $O_2$ |
|---|---|
| 1 | 0.015 |
| CE1 | 0.09 |
| CE2 | 0.14 |
| Non-coated CE2 | >1.4 |

Figure 3 shows that the coating formed on the bottle made from the composition of the invention is uniform whereas the coating formed on bottles made from the comparative compositions are non-uniform.

The permeability testing shows that the articles of the present invention have 6 to 10 times lower oxygen

permeability than the comparative examples. This is believed to be due to the improved adhesion of the coating to the bottle that results from the increased smoothness of the bottle surface resulting from its manufacture from polypropylene compositions comprising a polymer of propylene and a $C_4$ alpha olefin.

## Claims

1. A moulded article comprising a polypropylene composition, wherein said composition comprises a polymer (e.g. copolymer) of propylene and a $C_4$ alpha olefin (e.g. 1-butene).

2. An article as claimed in claim 1, wherein said composition further comprises a propylene homopolymer and/or a second propylene copolymer.

3. An article as claimed in claim 2, wherein said second propylene copolymer is a propylene ethylene or propylene 1-butene copolymer, preferably a propylene 1-butene copolymer.

4. An article as claimed in any preceding claim, wherein said polymer of propylene and a $C_4$ alpha olefin comprises at least 0.5 %mol (e.g. 0.5- 10 %mol) $C_4$ alpha olefin.

5. An article as claimed in any preceding claim, wherein the total 1-butene content of the composition is at least 1 %mol (e.g. 1-7 %mol).

6. An article as claimed in any preceding claim, wherein said copolymer(s) is a random copolymer.

7. An article as claimed in any preceding claim, wherein said polypropylene composition has a $MFR_2$ of 5-30 g/10 mins.

8. An article as claimed in any preceding claim, wherein said composition further comprises a nucleating agent.

9. An article as claimed in claim 8, wherein said nucleating agent is polymeric.

10. An article as claimed in any preceding claim, wherein said composition further comprises a reheat additive.

11. An article as claimed in any preceding claim having a haze of less than 10 % as measured on injection stretch blow moulded bottles having a thickness of 0.6 mm.

12. An article as claimed in any preceding claim having a mean surface roughness, Ra of less than 10 nm.

13. An article as claimed in any preceding claim which is coated (e.g. plasma coated).

14. An article as claimed in claim 13, wherein said coated article has an oxygen permeation of less than 0.05 ml $O_2$/pck/d.

15. An article as claimed in any preceding claim which is thin walled packaging, a cap or closure (e.g. bottle).

16. A process for the manufacture of an article as claimed in any one of claims 1 to 15 comprising moulding (e.g. injection stretch blow moulding) a polypropylene composition comprising a copolymer of propylene and a $C_4$ alpha olefin (e.g. 1-butene).

17. Use of a polypropylene composition as defined in any one of claims 1 to 10 for the manufacture of an article by moulding (e.g. injection moulding, blow moulding, stretch moulding, compression moulded, rotomoulding or ISBM)

18. A polypropylene composition as defined in any one of claims 1 to 10.

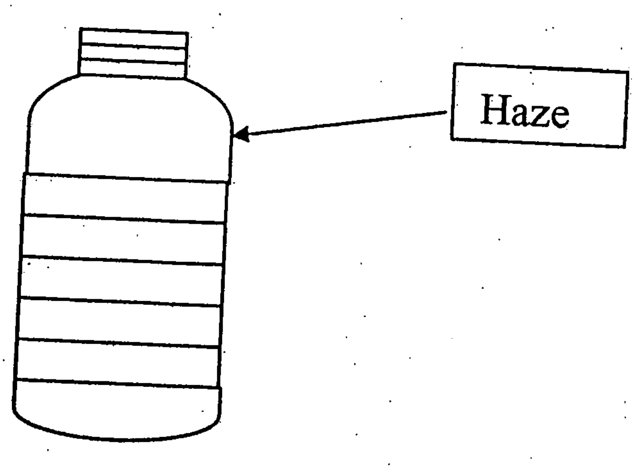


Figure 1

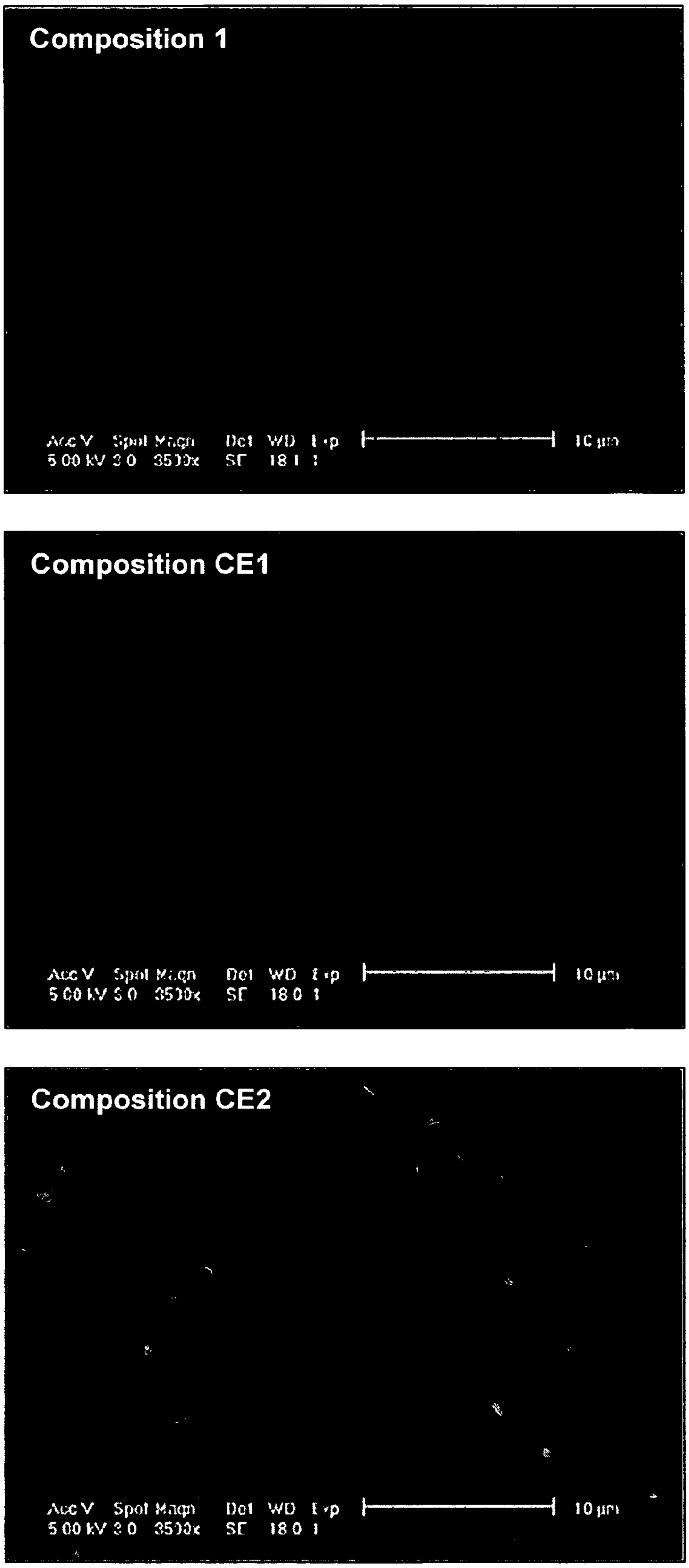


FIG. 2

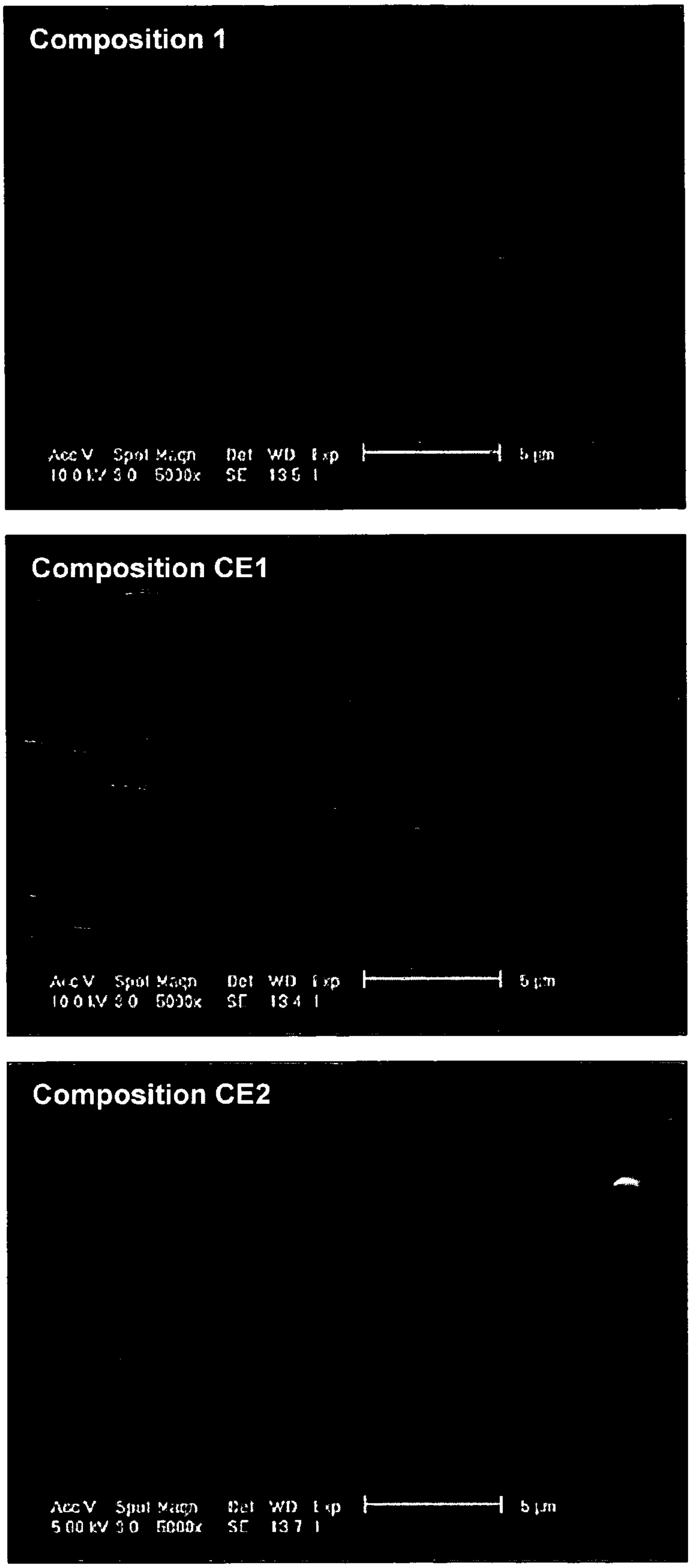


FIG. 3

European Patent Office

# EUROPEAN SEARCH REPORT

Application Number
EP 07 25 0230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 60 125627 A (MITSUI TOATSU CHEMICALS) 4 July 1985 (1985-07-04)<br>* abstract * | 1,4-8, 11,15-18 | INV. C08L23/10 C08L23/14 C08K5/00 |
| X | US 2006/173132 A1 (MEHTA ASPY K [US] ET AL) 3 August 2006 (2006-08-03)<br>* abstract; claims 1-87 *<br>* page 5, paragraph 74 *<br>* page 12, paragraph 133 * | 1-8,10, 11,15-18 | |
| X | EP 0 586 109 A2 (SUMITOMO CHEMICAL CO [JP]) 9 March 1994 (1994-03-09)<br>* abstract; claims 1-14 *<br>* page 2, line 55 - page 3, line 35 * | 1-10, 16-18 | |
| X | US 6 747 103 B1 (VESTBERG TORVALD [FI] ET AL) 8 June 2004 (2004-06-08)<br>* abstract; claims 1-55 *<br>* column 2 *<br>* column 3, line 41 *<br>* column 5, line 43 *<br>* column 10, lines 20,67 *<br>* column 11, lines 1,34,55 * | 1-10, 15-18 | |

TECHNICAL FIELDS SEARCHED (IPC)

C08L
C08K

The present search report has been drawn up for all claims

| Place of search | Date of completion of the search | Examiner |
|---|---|---|
| The Hague | 4 June 2007 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 07 25 0230

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2007

| Patent document cited in search report | | Publication date | Patent family member(s) | | | Publication date |
|---|---|---|---|---|---|---|
| JP 60125627 | A | 04-07-1985 | NONE | | | |
| US 2006173132 | A1 | 03-08-2006 | NONE | | | |
| EP 0586109 | A2 | 09-03-1994 | CA | 2103610 | A1 | 12-02-1994 |
| | | | DE | 69322026 | D1 | 17-12-1998 |
| | | | DE | 69322026 | T2 | 27-05-1999 |
| | | | JP | 6057057 | A | 01-03-1994 |
| | | | SG | 65557 | A1 | 22-06-1999 |
| US 6747103 | B1 | 08-06-2004 | AT | 299914 | T | 15-08-2005 |
| | | | AU | 771298 | B2 | 18-03-2004 |
| | | | AU | 4408300 | A | 21-11-2000 |
| | | | CA | 2372531 | A1 | 16-11-2000 |
| | | | CN | 1360616 | A | 24-07-2002 |
| | | | DE | 60021380 | D1 | 25-08-2005 |
| | | | DE | 60021380 | T2 | 27-04-2006 |
| | | | EP | 1183307 | A1 | 06-03-2002 |
| | | | ES | 2245308 | T3 | 01-01-2006 |
| | | | WO | 0068315 | A1 | 16-11-2000 |
| | | | JP | 2002544313 | T | 24-12-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006018777 A
- EP 0887379 A
- WO 9212182 A
- US 5234879 A
- WO 9924501 A
- US 20050118428 A
- WO 9924478 A